# EUROPEAN PATENT APPLICATION

(11) **EP 4 379 857 A1**
(43) Date of publication of application: **05.06.2024**
(21) Application number: 22867741.5
(22) Date of filing: 08.09.2022
(51) Int. Cl.: H01M 4/36, H01M 4/525, H01M 4/505, H01M 4/62, C01G 53/00, H01M 10/052, H01M 4/02

(54) **CATHODE ACTIVE MATERIAL, AND CATHODE AND LITHIUM SECONDARY BATTERY COMPRISING SAME**

(30) Priority: 10.09.2021 KR 20210121308
(71) Applicant: LG Energy Solution, Ltd., Seoul 07335 (KR)
(72) Inventor: HWANG, Jin Tae, Daejeon 34122 (KR); JUNG, Wang Mo, Daejeon 34122 (KR); JO, Chi Ho, Daejeon 34122 (KR); YOO, Tae Gu, Daejeon 34122 (KR); JUNG, Hae Jung, Daejeon 34122 (KR); HEO, Jong Wook, Daejeon 34122 (KR); CHO, Hyeon Jin, Daejeon 34122 (KR)
(74) Representative: Hoffmann Eitle
(86) International application number: PCT/KR2022/013559
(87) International publication number: WO 2023/038473

(57) **Abstract**

The present invention relates to a positive electrode active material and a method for preparing the same. The method for preparing a positive electrode material of the present invention includes the steps of mixing a transition metal precursor and a lithium raw material and primarily sintering the mixture to prepare a lithium nickel-based oxide in the form of single particles or quasi-single particles, secondarily sintering the lithium nickel-based oxide in the form of single particles or quasi-single particles, and mixing the secondarily sintered lithium nickel-based oxide and a boron raw material and then heat-treating the mixture to form a coating layer.

## Description

### TECHNICAL FIELD

This application claims the benefit of Korean Patent Application No. 10-2021-0121308, filed on September 10, 2021, the disclosure of which is incorporated herein in its entirety by reference.

The present invention relates to a positive electrode active material, a positive electrode including the same, and a lithium secondary battery, and more particularly, to a positive electrode active material in the form of single particles and/or quasi-single particles, a positive electrode including the same, and a lithium secondary battery.

### BACKGROUND ART

A lithium secondary battery generally includes a positive electrode, a negative electrode, a separator, and an electrolyte, and the positive electrode and the negative electrode include an active material capable of intercalation and deintercalation of lithium ions.

Lithium cobalt oxide (LiCoO₂), lithium nickel oxide (LiNiO₂), lithium manganese oxide (LiMnO₂, LiMnO₄, or the like), a lithium iron phosphate compound (LiFePO₄), or the like has been used as a positive electrode active material of the lithium secondary battery. Among these, the lithium cobalt oxide has the advantage of high operating voltage and excellent capacity characteristics, but it is difficult to commercially apply the lithium cobalt oxide to large-capacity batteries due to the high price and unstable supply of cobalt as a raw material. The lithium nickel oxide has poor structural stability, and thus it is difficult to achieve sufficient lifetime characteristics. Meanwhile, the lithium manganese oxide has excellent stability, but has a limitation of poor capacity characteristics. Accordingly, lithium composite transition metal oxides including two or more transition metals have been developed to compensate for limitations of lithium transition metal oxides including Ni, Co, or Mn alone, and among these, lithium nickel cobalt manganese oxides including Ni, Co, and Mn are widely used in electric vehicle batteries.

Conventional lithium metal oxides are generally in the form of spherical secondary particles in which tens to hundreds of primary particles are aggregated. However, with respect to the lithium metal oxides in the form of secondary particles in which many primary particles are aggregated as described above, there is a limitation in that particle breakage, in which the primary particles fall off in a rolling process during preparation of a positive electrode, is easy to occur and cracks occur in the particles during charge and discharge. When the particle breakage or cracks of the positive electrode active material occur, since a contact area with the electrolyte solution increases, gas generation and degradation of the active material due to a side reaction with the electrolyte solution are increased, and as a result, there is a limitation in that lifetime characteristics deteriorated.

In addition, the demand for high-output and high-capacity batteries, such as electric vehicle batteries, has recently increased, and accordingly, the nickel content in the positive electrode active material is gradually increasing. When the nickel content in the positive electrode active material is increased, initial capacity characteristics are improved, but when charging and discharging are repeated, a large amount of Ni⁺⁴ ions having high reactivity are generated, resulting in structural collapse of the positive electrode active material, and as a result, the degradation rate of the positive electrode active material is increased, thereby leading to deterioration in lifetime characteristics and battery safety.

In order to solve the above limitations, a technique for preparing a positive electrode active material in the form of single particles rather than secondary particles by increasing a sintering temperature during the preparation of lithium nickel cobalt manganese oxides has been proposed. The positive electrode active material in the form of single particles has a smaller contact area with the electrolyte than that of a conventional positive electrode active material in the form of secondary particles, and thus has less side reactions with the electrolyte and excellent particle strength such that particle breakage is less during the manufacture of an electrode. Therefore, when the positive electrode active material in the form of single particles is applied, there is an advantage that gas generation and lifetime characteristics are excellent.

However, in the case of a conventional positive electrode active material in the form of single particles, since less interface between the primary particles serving as a movement path of lithium ions in the particles reduces the lithium mobility, the initial resistance is high, and since the positive electrode active material is prepared at a relatively high sintering temperature, the amount of lithium by-products is large. In order to improve this, a method for removing lithium by-products and preventing a positive electrode active material from being contact with an electrolyte by forming a boron coating on the surface of the positive electrode active material has been proposed. However, when the boron coating layer is formed on the positive electrode active material in the form of single particles, there is a limitation that the initial resistance, particularly a discharge termination resistance, is greatly increased.

### DISCLOSURE OF THE INVENTION

### TECHNICAL PROBLEM

In order to solve the above limitations, an aspect of the present invention provides a method for preparing a positive electrode active material in the form of single particles or quasi-single particles capable of effectively removing lithium by-products while suppressing an increase in initial resistance and having excellent initial capacity and high-temperature lifetime characteristics, and a positive electrode active material prepared thereby.

### TECHNICAL SOLUTION

According to an aspect of the present invention, there is provided a method for preparing a positive electrode active material, the method including the steps of: mixing a transition metal precursor and a lithium raw material and primarily sintering the mixture at 800 °C to 1,000 °C to prepare a lithium nickel-based oxide having the form of at least one among single particles and quasi-single particles; secondarily sintering the lithium nickel-based oxide at 600 °C to 800 °C; and mixing the secondarily sintered lithium nickel-based oxide and a boron raw material and heat-treating the mixture to form a coating layer.

According to another aspect of the present invention, there is provided a positive electrode active material including: a lithium nickel-based oxide having composition represented by Formula 1 below and having the form of at least one among single particles and quasi-single particles; and a coating layer formed on the surface of the lithium nickel-based oxide and including boron (B), wherein a spinel-like phase is included on the surface of the lithium nickel-based oxide.

[Formula 1] LiₐNi_{b}Co_{c}M¹_{d}M²ₑO₂

In Formula 1 above, M¹ is Mn, Al, or a combination thereof, M² is Zr, W, Ti, Mg, Ca, Sr, or Ba, 0.8≤a≤1.2, 0.83≤b<1, 0<c<0.17, 0<d<0.17, and 0≤e≤0.1.

According to another aspect of the present invention, there are provided a positive electrode including a positive electrode active material layer including the positive electrode active material according to the present invention, and a lithium secondary battery including the positive electrode.

### ADVANTAGEOUS EFFECTS

A method for preparing a positive electrode active material according to the present invention is characterized by preparing a lithium nickel-based oxide having the form of single particles and/or quasi-single particles, and then sintering the lithium nickel-based oxide at a high temperature to form a boron coating layer. In the case of performing high-temperature sintering and then forming a boron coating layer as in the present invention, the surface structure of the lithium nickel-based oxide is improved by the high-temperature sintering, thereby suppressing an increase in resistance after the coating layer is formed, and residual lithium on the surface of the lithium nickel-based oxide is removed while reacting with boron in the process of forming the coating layer, thereby effectively removing the residual lithium.

Conventionally, it is common to prepare a coating layer by adding a boron source to a lithium nickel-based oxide in the form of single particles and then performing heat treatment. According to the conventional method, residual lithium may be removed when the boron coating layer is prepared, but there is a limitation in that a rock-salt phase, which is electrically inactive, is formed on the surfaces of single particles during the heat treatment process for forming the coating layer, thereby increasing resistance. The lithium nickel-based oxide in the form of single particles has the resistance characteristics inferior to those of the lithium nickel-based oxide in the form of secondary particles, and thus, if an additional increase in resistance occurs during the formation of the coating layer, the output characteristics are remarkably deteriorated and thus it is difficult to use the lithium nickel-based oxide in the form of single particles. In particular, when a coating layer is formed according to the conventional method, the resistance rapidly increases in a low SOC region, and thus it is difficult to apply the lithium nickel-based oxide to electric vehicle batteries requiring high output in the low SOC region.

However, when the high-temperature sintering is performed before the coating layer is formed as in the present invention, a spinel-like structure is formed on the surfaces of single particles and/or quasi-single particles, the spinel-like structure is maintained even after the coating layer is formed, and the rock-salt phase is not formed, and thus the resistance in the low SOC region (for example, the region having SOC of 10% or less) (hereinafter, referred to as a discharge termination resistance) may be minimized.

In addition, according to the preparation method of the present invention, residual lithium may be effectively removed without performing a washing process. In the case of a high-nickel positive electrode material having a nickel content of 80 mol% or more, an excess of lithium by-products is generated during the preparation, and when such lithium by-products are present, there is a limitation in that the electrolyte and the lithium by-products react to generate gas. Therefore, conventionally, it is common to remove the lithium by-products of the high-nickel positive electrode material through a washing process and then use the high-nickel positive electrode material. However, the lithium nickel-based oxide in the form of single particles or quasi-single particles has a limitation in that the initial resistance is remarkably increased and the output characteristics are deteriorated when the washing process is performed unlike the lithium nickel-based oxide in the form of secondary particles. However, when the boron coating layer is formed after the high-temperature sintering as in the present invention, the positive electrode active material having a small amount of residual lithium may be prepared without performing a washing process that causes an increase in resistance.

In addition, the positive electrode active material according to the present invention includes lithium nickel-based oxides in the form of single particles and/or quasi-single particles having high particle strength, and thus particle breakage is reduced during the manufacturing the electrode and charging and discharging, and the occurrence of side reactions with the electrolyte is suppressed due to a small amount of residual lithium, thereby reducing the amount of gas generated in the application of a secondary battery and exhibiting excellent high-temperature lifetime characteristics.

Also, even after the coating layer is formed, the positive electrode active material according to the present invention includes a quasi-spinel structure on the surface of the lithium nickel-based oxide, and thus an increase in resistance is less even in the low SOC and during the charging and discharging at high temperatures, thereby achieving outstanding output characteristics.

In addition, when the boron coating layer is formed on the lithium nickel-based oxide in the form of single particles and/or quasi-single particles as in the present invention, it is possible to achieve excellent initial capacity characteristics compared to the positive electrode active material in which the coating layer is not formed.

### BRIEF DESCRIPTION OF THE DRAWINGS

FIG. 1 is a photograph showing TEM analysis results on the surface and inside of a positive electrode active material prepared according to Example.
FIG. 2 is a photograph showing TEM analysis results on the surface and inside of a positive electrode active material prepared according to Comparative Example 1.
FIG. 3 is a photograph showing TEM analysis results on the surface and inside of a positive electrode active material prepared according to Comparative Example 2.
FIG. 4 is a photograph showing TEM analysis results on the surface and inside of a positive electrode active material prepared according to Comparative Example 3.
FIG. 5 is a graph showing resistance characteristics versus a State of Charge (SOC) of secondary batteries to which the positive electrode active materials prepared in Example and Comparative Example 2 are applied.
FIG. 6 is a graph showing high-temperature lifetime characteristics of secondary batteries to which the positive electrode active materials prepared according to Example and Comparative Examples 1 to 3 are applied.

### BEST MODE FOR CARRYING OUT THE INVENTION

Hereinafter, the present invention will be described in more detail.

It will be understood that words or terms used in the specification and claims shall not be interpreted as the meaning defined in commonly used dictionaries, and it will be further understood that the words or terms should be interpreted as having a meaning that is consistent with their meaning in the context of the relevant art and the technical idea of the invention, based on the principle that an inventor may properly define the meaning of the words or terms to best explain the invention.

As used herein, the term "single particle" refers to a particle composed of a single nodule. As used herein, the term "nodule" refers to a particle unit constituting single particles and quasi-single particles, and the nodule may be a single crystal which lacks a crystalline grain boundary, or may be a polycrystal having no grain boundary in appearance when observed in the view at a magnification of 5,000 to 20,000 using a scanning electron microscope (SEM). As used herein, the term "quasi-single particle" refers to a particle that is a composite formed of at most 30 nodules.

As used herein, the term "secondary particle" refers to a particle formed by aggregation of tens to hundreds of primary particles. More specifically, the secondary particle is an aggregate of at least 50 primary particles.

The expression "particle" used herein may include any one or all among a single particle, a quasi-single particle, a primary particle, a nodule, and a secondary particle.

As used herein, the term "average particle diameter D₅₀" refers to a particle size based on 50% of the volume cumulative particle size distribution of the positive electrode active material powder. When the lithium nickel-based oxide is a secondary particle, the average particle diameter means an average particle diameter of the secondary particles, and when the lithium nickel-based oxide is a mixture of single particles and quasi-single particles, the average particle diameter means an average particle diameter of the particles in these combinations. The average particle diameter D50 may be measured using a laser diffraction method. For example, a coating precursor or positive electrode active material powder may be dispersed in a dispersion medium, introduced into a commercially available laser diffraction particle size measuring apparatus (e.g., Microtrac MT 3000), irradiated with an ultrasonic wave of about 28 kHz at a 60-W output, and then a volume cumulative particle size distribution graph may be obtained, and a particle size corresponding to 50% of the volume cumulative amount may be determined to measure the average particle diameter D₅₀.

### Method for Preparing Positive Electrode Active Material

First, a method for preparing a positive electrode active material according to the present invention will be described.

The method for preparing a positive electrode active material according to the present invention includes the steps of (1) mixing a transition metal precursor and a lithium raw material and primarily sintering the mixture at 800 °C to 1,000 °C to prepare a lithium nickel-based oxide having the form of at least one among single particles and quasi-single particles, (2) secondarily sintering the lithium nickel-based oxide at 600 °C to 800 °C, and (3) mixing the secondarily sintered lithium nickel-based oxide and a boron raw material and heat-treating the mixture to form a coating layer.

### (1) Step of Preparing Lithium Nickel-Based Oxide

First, a transition metal precursor and a lithium raw material are mixed and primarily sintered to prepare a lithium nickel-based oxide in the form of single particles and/or quasi-single particles.

In this case, the transition metal precursor may be used by purchasing a precursor such as a commercially available nickel cobalt manganese-based hydroxide or may be prepared by a precursor preparation method known in the art.

Preferably, the transition metal precursor used herein may be a transition metal hydroxide containing nickel and cobalt and having a Ni content of 80 mol% or more in the total transition metals, and more preferably, may be a nickel cobalt manganese hydroxide having a Ni content of 80 mol% or more. When the nickel content in the transition metal precursor satisfies the above range, high capacity characteristics may be achieved.

Specifically, the transition metal precursor may have composition represented by Formula 2 below:

[Formula 2] NiₓCo_{y}M¹_{z}M²_{w} (OH) ₂

In Formula 2 above, M¹ is Mn, Al, or a combination thereof, and preferably, Mn or a combination of Mn and Al.

M² above may be at least one selected from the group consisting of Zr, W, Y, Ba, Ca, Ti, Mg, Ta, and Nb, preferably at least one selected from the group consisting of Zr, Y, Mg, and Ti, and more preferably Zr, Y, or a combination thereof.

x above denotes a molar ratio of nickel among all metals in the precursor, and may satisfy 0.8≤x≤1, 0.82≤x≤1, or 0.83≤x≤1. When the molar ratio of nickel satisfies the above range, high energy density may be exhibited and high capacity may be achieved.

y above denotes a molar ratio of cobalt among all metals in the precursor, and may satisfy 0<y<0.2, 0<y<0.18, or 0.01≤y≤0.17. When the molar ratio of cobalt satisfies the above range, good resistance characteristics and output characteristics may be achieved.

z above denotes a molar ratio of the M¹ element among all metals in the precursor, and may satisfy 0<z<0.2, 0<z<0.18, or 0.01≤z≤0.17. When the molar ratio of the M¹ element satisfies the above range, the positive electrode active material exhibits excellent structural stability.

w above denotes a molar ratio of the M² element among all metals in the precursor, and may satisfy 0≤w≤0.1 or 0≤w≤0.05.

For example, the transition metal precursor may be prepared by forming a transition-metal aqueous solution and an ammonium cation complex, injecting a basic compound into a reactor, stirring the mixture, and performing a coprecipitation reaction.

The transition-metal aqueous solution may be prepared by dissolving a raw material containing transition metals in a solvent such as water, for example, dissolving a nickel-containing raw material or a cobalt-containing raw material in water. In addition, as necessary, the transition-metal aqueous solution may further contain an M¹ raw material and/or an M² metal-containing raw material.

Meanwhile, the transition metal-containing raw material may be an acetate, a carbonate, a nitrate, a sulfate, a halide, a sulfide, or an oxide of the transition metal.

Specifically, the nickel-containing raw material may be, for example, NiO, NiCO₃·2Ni(OH)₂·4H₂O, NiC₂O₂·2H₂O, Ni(NO₃)₂·6H₂O, NiSO₄, NiSO₄·6H₂O, a nickel halide, or a combination thereof.

The cobalt-containing raw material may be, for example, CoSO₄, Co(OCOCH₃)₂·4H₂O, Co(NO₃)₂·6H₂O, CoSO₄·7H₂O, or a combination thereof.

The M¹-containing raw material may be a manganese-containing raw material and/or an aluminum-containing raw material. The manganese-containing raw material may be, for example, Mn₂O₃, MnO₂, Mn₃O₄, MnCO₃, Mn(NO₃)₂, MnSO₄·H₂O, a manganese acetate, a manganese halide, or a combination thereof, and the aluminum-containing raw material may be, for example, Al₂O₃, Al(OH)₃, Al(NO₃)₃, Al₂(SO₄)₃, (HO)₂AlCH₃CO₂, HOAl(CH₃CO₂)₂, Al(CH₃CO₂)₃, an aluminum halide, or a combination thereof. However, Al may not be added to the transition-metal aqueous solution, but may be added together with the lithium raw material in the sintering step which will be described later.

The M²-containing raw material may be an acetate, a carbonate, a nitrate, a sulfate, a halide, a sulfide, or an oxide of the M² metal.

The input amount of each transition metal-containing raw material may be determined in consideration of a molar ratio of transition metals in a positive electrode active material to be finally produced.

Meanwhile, a forming agent of the ammonium cation complex may include at least one compound selected from the group consisting of NH₄OH, (NH₄)₂SO₄, NH₄NO₃, NH₄Cl, CH₃COONH₄, and NH₄CO₃, and may be introduced into the reactor in the form of a solution in which the compound is dissolved in a solvent. In this case, as the solvent, water or a mixture of water and an organic solvent (specifically, alcohol etc.), which may be uniformly mixed with the water, may be used.

The basic compound may be at least one compound selected from the group consisting of NaOH, KOH, and Ca(OH)₂, and may be introduced into the reactor in the form of a solution in which the compound is dissolved in a solvent. In this case, as the solvent, water or a mixture of water and an organic solvent (specifically, alcohol etc.), which may be uniformly mixed with the water, may be used.

As described above, when the transition-metal aqueous solution, the forming agent of the ammonium cation complex, and the basic compound are introduced into the reactor and stirred, the transition metals in the transition-metal aqueous solution are co-precipitated to generate precursor particles in the form of a transition metal hydroxide.

In this case, the transition-metal aqueous solution, the forming agent of the ammonium cation complex, and the basic compound are added in an amount such that the pH of the reaction solution is within a desired range.

When the precursor particles are formed by the above method, the particles are separated from the reaction solution to obtain a transition metal precursor. For example, the transition metal precursor may be separated from the reaction solution by filtering the reaction solution, and then the separated transition metal precursor may be washed with water and dried to obtain the transition metal precursor. In this case, as necessary, processes such as pulverizing and/or classifying may be performed.

Next, the transition metal precursor and the lithium raw material are mixed and then primarily sintered to prepare a lithium nickel-based oxide in the form of single particles and/or quasi-single particles. In this case, as necessary, the M¹-containing raw material and/or the M²-containing raw material may be mixed and sintered together, and specific examples of the M¹-containing raw material and/or the M²-containing raw material are the same as described above.

As the lithium raw material, a lithium-containing sulfate, a nitrate, an acetate, a carbonate, an oxalate, a citrate, a halide, a hydroxide, an oxyhydroxide, or the like may be used, and for example, Li₂CO₃, LiNO₃, LiNO₂, LiOH, LiOH·H₂O, LiH, LiF, LiCl, LiBr, LiI, CH₃COOLi, Li₂O, Li₂SO₄, CH₃COOLi, Li₃C₆H₅O₇, or a mixture thereof may be used.

Meanwhile, the lithium raw material and the positive electrode active material precursor may be mixed so that the molar ratio of Li and the total metal in the precursor is in a ratio of 1:1 to 1.1:1, preferably 1.02:1 to 1.05:1. When the mixing ratio of the lithium raw material and the metal in the positive electrode active material precursor satisfies the above range, the layered crystal structure of the positive electrode active material is well developed, and thus the positive electrode active material having excellent capacity characteristics and structural stability may be prepared.

Meanwhile, the sintering is performed at a temperature at which single particles and/or quasi-single particles can be formed. In order to form single particles and/or quasi-single particles, the sintering should be performed at a higher temperature compared to the time when the conventional lithium nickel-based oxides in the form of secondary particles are prepared, and for example, the sintering should be performed at a temperature higher by 30°C to 100°C compared to the time when the conventional lithium nickel-based oxides in the form of secondary particles are prepared in the case of the same precursor composition. The sintering temperature for forming single particles and/or quasi-single particles may vary with the metal composition in the precursor, and for example, when a high-Ni lithium nickel-based oxide having a nickel (Ni) content of 80 mol% or more is to be formed as single particles or quasi-single particles, the primary sintering temperature may be about 800 °C to about 1,000 °C, preferably about 800 °C to about 950 °C, and more preferably about 850 °C to about 950 °C. When the primary sintering temperature satisfies the above range, a lithium nickel-based oxide in the form of single particles and/or quasi-single particles having excellent electrochemical properties may be prepared. When the primary sintering temperature is less than 800 °C, the positive electrode active material in the form of secondary particles is prepared, and when the temperature is greater than 1,000 °C, the sintering is excessively performed, and thus the layered crystal structure is not properly formed, thereby leading to deterioration in the electrochemical properties.

In addition, the primary sintering may be performed in an oxygen atmosphere for 6 hours to 35 hours, preferably 6 hours to 20 hours, and more preferably 6 hours to 12 hours. In the present specification, the oxygen atmosphere refers to an atmosphere containing a sufficient amount of oxygen for sintering, the atmosphere including an air atmosphere. In particular, it is preferable to perform the primary sintering in an atmosphere having an oxygen partial pressure higher than the air atmosphere. When the primary sintering time satisfies the above range, a lithium nickel-based oxide in the form of single particles and/or quasi-single particles may be formed. When the primary sintering time is too short, particle growth is insufficient to thus form a lithium nickel-based oxide in the form of secondary particles, and when the time is too long, a rock-salt phase may occur, thereby leading to deterioration in the electrochemical properties of the active material.

The lithium nickel-based oxide prepared by the primary sintering has the form of single particles consisting of a single nodule, quasi-single particles, which are complexes of at most 30 nodules, preferably 2-20 nodules, more preferably, 2-10 nodules, or a mixture thereof.

In addition, the lithium nickel-based oxide may have composition in which the nickel content in all metals excluding lithium is 80 mol% or more, preferably 82 mol% or more, and more preferably 83 mol% or more, and specifically, the lithium nickel cobalt manganese-based oxide may have 80 mol% or more, preferably 82 mol% or more, and more preferably 83 mol% or more of the nickel content in all metals excluding lithium. When the nickel content in the lithium nickel-based oxide satisfies the above range, a high energy density can be achieved.

More specifically, the lithium nickel-based oxide may have composition represented by [Formula 1] below:

[Formula 1] LiₐNi_{b}Co_{c}M¹_{d}M²ₑO₂

In Formula 1 above, M¹ may be Mn, Al, or a combination thereof, and preferably, Mn or Mn and Al.

M² above may be at least one selected from the group consisting of Zr, W, Y, Ba, Ca, Ti, Mg, Ta, and Nb, preferably at least one selected from the group consisting of Zr, Y, Mg, and Ti, and more preferably Zr, Y, or a combination thereof. The M² element is not necessarily included, but when included in an appropriate amount, the M² element may serve to promote particle growth during the sintering or improve the crystal structure stability.

a above denotes a molar ratio of lithium in the lithium nickel-based oxide, and may satisfy 0.8≤a≤1.2, 0.85≤a≤1.15, or 0.9≤a≤1.2. When the molar ratio of lithium satisfies the above range, the crystal structure of the lithium nickel-based oxide may be stably formed.

b above denotes a molar ratio of nickel among all metals excluding lithium in the lithium nickel-based oxide, and may satisfy 0.8≤b<1, 0.82≤b<1, or 0.83≤b<1. When the molar ratio of nickel satisfies the above range, high energy density may be exhibited and high capacity may be achieved.

c above denotes a molar ratio of cobalt among all metals excluding lithium in the lithium nickel-based oxide, and may satisfy 0<c<0.2, 0<c<0.18, or 0.01≤c≤0.17. When the molar ratio of cobalt satisfies the above range, good resistance characteristics and output characteristics may be achieved.

d above denotes a molar ratio of the M¹ element among all metals excluding lithium in the lithium nickel-based oxide, and may satisfy 0<d<0.2, 0<d<0.18, or 0.01≤d≤0.17. When the molar ratio of the M¹ element satisfies the above range, the positive electrode active material exhibits excellent structural stability.

e above denotes a molar ratio of the M² element among all metals excluding lithium in the lithium nickel-based oxide, and may satisfy 0≤e≤0.1 or 0≤e≤0.05.

Meanwhile, after the primary sintering step, it is preferable to perform a milling process in order to remove large particles due to agglomeration and aggregation between particles and obtain a desired average particle size.

The milling may be performed using a general milling method known in the art, for example, a jet-mill method, and the milling may be performed under conditions of, for example, a pulverizing pressure of 1-2 bar, a classifier speed of 500-3,000 rpm, and a feed rate of 2,000-6,000 g/hr.

Meanwhile, the milling is preferably performed in an atmosphere with little moisture, for example, in a dry air atmosphere. This is because when the lithium nickel-based oxide is exposed to moisture, the generation of lithium by-products may increase, and the physical properties in the surface of the active material may deteriorate.

### (2) Step of Secondary Sintering

Next, the lithium nickel-based oxide in the form of single particles and/or quasi-single particles prepared by the above method is secondarily sintered.

In this case, the secondary sintering temperature may be about 600 °C to about 800 °C, preferably about 650 °C to about 750 °C. When the secondary sintering temperature satisfies the above range, the surface structure of the lithium nickel-based oxide may be transformed to a spinel-like structure such that an increase in resistance after forming the coating layer may be suppressed and the amount of residual lithium may be reduced. If the secondary sintering temperature is too low, the surface structure of the lithium nickel-based oxide is not changed, and thus a rock-salt phase may be generated in the process of forming a coating layer, and if the secondary sintering temperature is too high, the crystal structure is changed even inside the lithium nickel-based oxide, thereby leading to deterioration in the electrochemical properties.

In addition, the secondary sintering may be performed under an oxygen atmosphere for 2 hours to 10 hours, preferably 4 hours to 6 hours. If the secondary sintering time is too short, the effect of removing lithium by-products is insignificant, and if the secondary sintering time is too long, recrystallization may occur excessively, thereby leading to deterioration in the electrochemical properties of the positive electrode active material.

### (3) Step of Forming Boron Coating Layer

Next, the secondarily sintered lithium nickel-based oxide and a boron (B) raw material are mixed and then heat-treated to form a coating layer.

The boron (B) raw material may be, for example, a boric acid, a boron oxide, or the like, but is not limited thereto.

Meanwhile, the lithium nickel-based oxide and the boron (B) raw material may be mixed in a solid phase or a liquid phase, but in the case of the liquid phase mixing, the process is complicated and the lithium nickel-based oxide may be damaged by a solvent during a coating process, and thus it is preferable to be mixed through the solid phase mixing.

In addition, the lithium nickel-based oxide and the boron (B) raw material may be mixed in a weight ratio of 100:0.05 to 100:0.3, preferably 100:0.05 to 100:0.2, and more preferably 100:0.1 to 100:0.2. When the mixing ratio of the lithium nickel-based oxide and the boron raw material satisfies the above range, a positive electrode active material having excellent capacity and resistance characteristics may be prepared.

Meanwhile, the heat treatment is preferably performed in a temperature range of 200 °C to 500 °C, preferably 200 °C to 400 °C. When the heat treatment temperature at the time of forming the coating layer satisfies the above range, the coating layer may be uniformly formed on the surface of the lithium nickel-based oxide, and deformation of the lithium nickel-based oxide due to the heat treatment may be minimized.

Meanwhile, it is preferable that the method for preparing a positive electrode active material according to the present invention does not include a washing process. Conventionally, when a high-Ni NCM-based lithium nickel-based oxide having a nickel (Ni) content of 80 mol% or more is prepared, a washing process after the sintering is generally performed in order to reduce the lithium by-product content. However, the research of the present inventors has shown that when the washing process is performed in the preparation of the positive electrode active material in the form of single particles or quasi-single particles, the surface properties of the lithium nickel-based oxide deteriorate during the washing process, and thus the resistance is increased. Therefore, when the positive electrode active material of the present invention is prepared, washing is not performed, but residual lithium on the surface of the lithium nickel-based oxide is consumed through the processes of the secondary sintering and coating layer formation, thereby improving resistance characteristics.

### Positive Electrode Active Material

Next, the positive electrode active material according to the present invention will be described.

The positive electrode active material according to the present invention includes: (1) a lithium nickel-based oxide having the form of at least one among single particles and quasi-single particles; and (2) a coating layer, which is formed on the surface of the lithium nickel-based oxide and includes boron (B). The positive electrode active material according to the present invention may be prepared according to the above-described method of the present invention.

### (1) Lithium Nickel-Based Oxide Particles

The lithium nickel-based oxide particles are single particles composed of a single nodule or quasi-single particles which are complexes of at most 30 nodules, preferably 2-20 nodules, and more preferably, 2-10 nodules.

Since the lithium nickel-based oxide particles in the form of single particles and/or quasi-single particles have higher particle strength than the conventional lithium nickel-based oxide in the form of secondary particles in which tens to hundreds of primary particles are aggregated, there is less particle breakage during rolling.

In addition, the lithium nickel-based oxide in the form of single particles and/or quasi-single particles according to the present invention has less number of nodules constituting the particles, thereby reducing changes due to volume expansion and contraction of the nodules during charging and discharging, and thus significantly reducing cracks within the particles.

Meanwhile, the lithium nickel-based oxide particles may have composition in which the nickel content in all metals excluding lithium is 80 mol% or more, preferably 82 mol% or more, and more preferably 83 mol% or more, and specifically, the lithium nickel cobalt manganese-based oxide may have 80 mol% or more, preferably 82 mol% or more, and more preferably 83 mol% or more of the nickel content in all metals excluding lithium. When the nickel content in the lithium nickel-based oxide particles satisfies the above range, a high energy density can be achieved.

More specifically, the lithium nickel-based oxide particles may have composition represented by [Formula 1] below:

[Formula 1] LiₐNi_{b}Co_{c}M¹_{d}M²ₑO₂

In Formula 1 above, M¹ may be Mn, Al, or a combination thereof, and preferably, Mn or Mn and Al.

M² above may be at least one selected from the group consisting of Zr, W, Y, Ba, Ca, Ti, Mg, Ta, and Nb, preferably at least one selected from the group consisting of Zr, Y, Mg, and Ti, and more preferably Zr, Y, or a combination thereof. The M² element is not necessarily included, but when included in an appropriate amount, the M² element may serve to promote particle growth during the sintering or improve the crystal structure stability.

a above denotes a molar ratio of lithium in the lithium nickel-based oxide, and may satisfy 0.8≤a≤1.2, 0.85≤a≤1.15, or 0.9≤a≤1.2. When the molar ratio of lithium satisfies the above range, the crystal structure of the lithium nickel-based oxide may be stably formed.

b above denotes a molar ratio of nickel among all metals excluding lithium in the lithium nickel-based oxide, and may satisfy 0.8≤b<1, 0.82≤b<1, or 0.83≤b<1. When the molar ratio of nickel satisfies the above range, high energy density may be exhibited and high capacity may be achieved.

c above denotes a molar ratio of cobalt among all metals excluding lithium in the lithium nickel-based oxide, and may satisfy 0<c<0.2, 0<c<0.18, or 0.01≤c≤0.17. When the molar ratio of cobalt satisfies the above range, good resistance characteristics and output characteristics may be achieved.

d above denotes a molar ratio of the M¹ element among all metals excluding lithium in the lithium nickel-based oxide, and may satisfy 0<d<0.2, 0<d<0.18, or 0.01≤d≤0.17. When the molar ratio of the M¹ element satisfies the above range, the positive electrode active material exhibits excellent structural stability.

e above denotes a molar ratio of the M² element among all metals excluding lithium in the lithium nickel-based oxide, and may satisfy 0≤e≤0.1 or 0≤e≤0.05.

### (2) Coating Layer

The positive electrode active material according to the present invention includes a boron coating layer on the surface of the lithium nickel-based oxide particles in the form of single particles and/or quasi-single particles as described above.

When the boron coating layer is formed on the surface of the lithium nickel-based oxide particles in the form of single particles and/or quasi-single particles, the boron coating layer facilitates the movement of lithium on the surface of the lithium nickel-based oxide particles, thereby exhibiting an effect of improving the initial capacity compared to the case where the coating layer is not formed.

Meanwhile, the boron (B) may be included in an amount of 100 ppm to 2,000 ppm, preferably 300 ppm to 1,500 ppm, and more preferably 500 ppm to 1,000 ppm with respect to the total weight of the positive electrode active material. When the boron content satisfies the above range, the effect of increasing the capacity is excellent.

In addition, the coating layer may have an average thickness of 10 nm to 300 nm, preferably 20 nm to 200 nm, and more preferably 50 nm to 100 nm. If the coating layer is too thick, the initial resistance may increase, and if the coating layer is too thin, the effects of reducing residual lithium and increasing capacity are insignificant.

Meanwhile, the positive electrode active material according to the present invention includes a spinel-like phase on the surface of the lithium nickel-based oxide. As described above, when the secondary sintering at a high temperature is additionally performed before the coating layer is formed, the spinel-like phase is formed on the surface of the lithium nickel-based oxide by the secondary sintering. When the spinel-like phase is formed on the surface of the lithium nickel-based oxide as in the present invention, the formation of a rock-salt phase, which causes an increase in resistance when the coating layer is formed, is suppressed, thereby minimizing an increase in resistance.

In addition, the positive electrode active material according to the present invention has a small residual lithium amount since the residual lithium present on the surface of the lithium nickel-based oxide is removed in the processes of secondary sintering and coating layer formation. Specifically, the positive electrode active material according to the present invention may have a residual lithium amount of 0.5 wt% or less, preferably 0.01 wt% to 0.5 wt%, and more preferably 0.01 wt% to 0.4 wt%. Since the residual lithium amount is small as described above, it is possible to minimize the generation of gas by reacting the residual lithium with the electrolyte during charging and discharging and/or at high temperatures, thereby achieving excellent lifetime characteristics.

Meanwhile, the positive electrode active material according to the present invention may have an average particle diameter of nodules of 0.5 µm to 3 pm, preferably 0.8 µm to 2.5 pm, and more preferably 0.8 µm to 1.5 µm. When the average particle diameter of the nodules satisfies the above range, the positive electrode active material in the form of single particles and/or quasi-single particles having excellent electrochemical properties may be formed. If the average particle diameter of the nodules is too small, the number of aggregations of the nodules that form lithium nickel-based oxide particles increases, thereby reducing the effect of suppressing the generation of particle breakage during rolling, and if the average particle diameter of the nodules is too large, the lithium diffusion path inside the nodule is lengthened, thereby increasing resistance and reducing output characteristics.

In addition, the positive electrode active material may have an average particle diameter D₅₀ of 2 µm to 6 µm, preferably 2 µm to 5 µm, and more preferably 3 µm to 5 µm. There are limitations in that if D₅₀ of the positive electrode active material is too small, it is difficult to form an active material layer when the electrode is manufactured, electrochemical properties deteriorate due to poor electrolyte solution wetting, and if D₅₀ is too large, resistance increases and output characteristics deteriorate.

In addition, the positive active material may have an average crystallite size of 150 nm to 300 nm, 200 nm to 280 nm, or 200 nm to 250 nm. When the average crystallite size satisfies the above range, the generation of a rock-salt phase may be reduced when the lithium nickel-based oxide is prepared, and thus the positive electrode active material in the form of single particles or quasi-single particles having excellent resistance characteristics may be prepared. Generally, the positive electrode active material in the form of single particles or quasi-single particles is prepared by a method for increasing the size of nodules by elevating the sintering temperature, and there is a limitation in that when the size of the nodules only increases while the size of the crystal is small, a rock-salt phase is formed on the surface of the nodules, thereby increasing resistance. However, when the average crystallite size and the average particle diameter of nodules increase together, the formation of a rock-salt phase is minimized to thus obtain an effect of suppressing an increase in resistance.

As described above, when the positive electrode active material of the present invention including the boron coating layer on the surface of the lithium nickel-based oxide particles in the form of single particles or quasi-single particles and having the spinel-like phase formed on the surface of the lithium nickel-based oxide is applied, a secondary battery having a low discharge termination resistance, high initial capacity, and excellent high-temperature cycle characteristics may be realized. In particular, when the positive electrode active material according to the present invention is applied, the discharge termination resistance and the high-temperature cycle resistance characteristics may be improved at the same time.

Specifically, when a coin-half cell is manufactured using the positive electrode active material according to the present invention, the ratio R₁₀/R₉₀ of the resistance (R₁₀) at SOC 10 to the resistance (R₉₀) at SOC 90 of the coin-half cell may be 3 or less, preferably 1 to 3, and more preferably 1.5 to 3, and the coin-half cell may have a resistance increase rate of 100% or less, preferably 50-100% after 50 cycles at 45 °C.

In this case, the coin-half cell includes, in the positive electrode active material layer, the positive electrode active material, the conductive agent, and the binder in a weight ratio of 96:2:2, and uses a lithium metal electrode as a negative electrode, and uses an electrolyte prepared by dissolving 1M LiPF₆ in a mixed organic solvent prepared by mixing ethylene carbonate/dimethyl carbonate/diethyl carbonate in a volume ratio of 1:2:1 and adding 2 wt% of vinylene carbonate (VC).

In addition, R₁₀ and R₉₀ above were measured through the voltage change when the coin-half cell was charged and discharged once at 2.5-4.25 V under the condition of 0.1C/0.1C, then charged to 4.25 V again, and discharged to 10% of the cell discharging capacity by 10%, and a current was applied at SOC 90 and SOC 10 at 2.5 C for 10 seconds.

In addition, the resistance increase rate after 50 cycles is a percentage value of resistance after 50 cycles with respect to resistance after 1 cycle, when charging and discharging the coin-half cell at 45 °C at 2.5-4.25 V under the condition of 0.1C/0.1C is set as 1 cycle.

### Positive Electrode

Next, a positive electrode according to the present invention will be described.

The positive electrode according to the present invention includes a positive electrode active material layer including the positive electrode active material according to the present invention. Specifically, the positive electrode includes a positive electrode collector and a positive electrode active material layer which is formed on the positive electrode collector and includes the positive electrode active material.

In the positive electrode, the positive electrode collector is not particularly limited as long as it has conductivity without causing adverse chemical changes in the battery, and, for example, stainless steel, aluminum, nickel, titanium, fired carbon, or aluminum or stainless steel that is surface-treated with one of carbon, nickel, titanium, silver, or the like may be used. Also, the positive electrode collector may typically have a thickness of 3 um to 500 µm, and microscopic irregularities may be formed on the surface of the collector to improve the adhesion of the positive electrode active material. The positive electrode collector, for example, may be used in various shapes such as a film, a sheet, a foil, a net, a porous body, a foam body, and a non-woven fabric body.

Also, the positive electrode active material layer may include a conductive agent and a binder in addition to the above-described positive electrode active material.

The conductive agent is used to provide conductivity to the electrode, wherein any conductive agent may be used without particular limitation as long as it has suitable electron conductivity without causing adverse chemical changes in the battery. Specific examples of the conductive agent may include graphite such as natural graphite or artificial graphite; carbon based materials such as carbon black, acetylene black, Ketjen black, channel black, furnace black, lamp black, thermal black, carbon fibers, and carbon nanotubes; powder or fibers of metal such as copper, nickel, aluminum, and silver; conductive whiskers such as zinc oxide whiskers and potassium titanate whiskers; conductive metal oxides such as titanium oxide; or conductive polymers such as polyphenylene derivatives, and any one alone thereof or a mixture of two or more thereof may be used. The conductive agent may be typically included in an amount of 1 wt% to 30 wt%, preferably 1 wt% to 20 wt%, and more preferably 1 wt% to 10 wt% with respect to the total weight of the positive electrode active material layer.

The binder serves to improve the adhesion between the positive electrode active material particles and the adhesion between the positive electrode active material and the positive electrode collector. Specific examples of the binder may include polyvinylidene fluoride (PVDF), polyvinylidene fluoride-hexafluoropropylene copolymer (PVDF-co-HFP), polyvinyl alcohol, polyacrylonitrile, carboxymethyl cellulose (CMC), starch, hydroxypropyl cellulose, regenerated cellulose, polyvinylpyrrolidone, polytetrafluoroethylene, polyethylene, polypropylene, an ethylene-propylene-diene monomer rubber (EPDM rubber), a sulfonated EPDM, a styrene-butadiene rubber (SBR), a fluorine rubber, or various copolymers thereof, and any one alone thereof or a mixture of two or more thereof may be used. The binder may be included in an amount of 1 wt% to 30 wt%, preferably 1 wt% to 20 wt%, and more preferably 1 wt% to 10 wt% with respect to the total weight of the positive electrode active material layer.

The positive electrode may be prepared according to a typical method of preparing a positive electrode. For example, the positive electrode may be prepared by mixing a positive electrode active material, a binder, and/or a conductive agent in a solvent to prepare a positive electrode slurry, coating the positive electrode slurry on a positive electrode collector, and then drying and rolling the coated positive electrode collector.

The solvent may be a solvent normally used in the art. The solvent may include dimethyl sulfoxide (DMSO), isopropyl alcohol, N-methylpyrrolidone (NMP), acetone, or water, and any one alone thereof or a mixture of two or more thereof may be used. An amount of the solvent used may be sufficient if the solvent may dissolve or disperse the positive electrode active material, the conductive agent, and the binder in consideration of a coating thickness of a slurry and manufacturing yield, and may allow to have a viscosity that may provide excellent thickness uniformity during the subsequent coating for the preparation of the positive electrode.

Alternatively, the positive electrode may be prepared by casting the positive electrode slurry on a separate support and then laminating a film separated from the support on the positive electrode collector.

### Lithium Secondary Battery

Next, a lithium secondary battery according to the present invention will be described.

The lithium secondary battery of the present invention includes the positive electrode according to the present invention. Specifically, the lithium secondary battery includes a positive electrode, a negative electrode disposed to face the positive electrode, a separator disposed between the positive electrode and the negative electrode, and an electrolyte, wherein the positive electrode is as described above. Also, the lithium secondary battery may further selectively include a battery container accommodating an electrode assembly of the positive electrode, the negative electrode, and the separator, and a sealing member sealing the battery container.

In the lithium secondary battery, the negative electrode includes a negative electrode collector and a negative electrode active material layer disposed on the negative electrode collector.

The negative electrode collector is not particularly limited as long as it has high conductivity without causing adverse chemical changes in the battery, and, for example, copper, stainless steel, aluminum, nickel, titanium, fired carbon, copper or stainless steel that is surface-treated with one of carbon, nickel, titanium, silver, or the like, and an aluminum-cadmium alloy may be used. Also, the negative electrode collector may typically have a thickness of 3 um to 500 µm, and, similar to the positive electrode collector, microscopic irregularities may be formed on the surface of the collector to improve the adhesion of the negative electrode active material. The negative electrode collector, for example, may be used in various shapes such as a film, a sheet, a foil, a net, a porous body, a foam body, and a non-woven fabric body.

The negative electrode active material layer selectively includes a binder and a conductive agent in addition to the negative electrode active material.

A compound capable of reversibly intercalating and deintercalating lithium may be used as the negative electrode active material. Specific examples of the negative electrode active material may be a carbonaceous material such as artificial graphite, natural graphite, graphitized carbon fibers, and amorphous carbon; a metallic compound alloyable with lithium such as Si, Al, Sn, Pb, Zn, Bi, In, Mg, Ga, Cd, a Si alloy, a Sn alloy, or an Al alloy; a metal oxide which may be doped and undoped with lithium such as SiO_{β} (0<β<2), SnO₂, vanadium oxide, and lithium vanadium oxide; or a composite including the metallic compound and the carbonaceous material such as a Si-C composite or a Sn-C composite, and any one thereof or a mixture of two or more thereof may be used.

Also, a metallic lithium thin film may be used as the negative electrode active material. Furthermore, both low crystalline carbon and high crystalline carbon may be used as the carbon material. Typical examples of the low crystalline carbon may be soft carbon and hard carbon, and typical examples of the high crystalline carbon may be irregular, planar, flaky, spherical, or fibrous natural graphite or artificial graphite, Kish graphite, pyrolytic carbon, mesophase pitch-based carbon fibers, meso-carbon microbeads, mesophase pitches, and high-temperature sintered carbon such as petroleum or coal tar pitch derived cokes.

The conductive agent is used to provide conductivity to the electrode, wherein any conductive agent may be used without particular limitation as long as it has suitable electron conductivity without causing adverse chemical changes in the battery. Specific examples of the conductive agent may include graphite such as natural graphite or artificial graphite; carbon based materials such as carbon black, acetylene black, Ketjen black, channel black, furnace black, lamp black, thermal black, carbon fibers, and carbon nanotubes; powder or fibers of metal such as copper, nickel, aluminum, and silver; conductive whiskers such as zinc oxide whiskers and potassium titanate whiskers; conductive metal oxides such as titanium oxide; or conductive polymers such as polyphenylene derivatives, and any one alone thereof or a mixture of two or more thereof may be used. The conductive agent may be typically included in an amount of 1 wt% to 30 wt%, preferably 1 wt% to 20 wt%, and more preferably 1 wt% to 10 wt% with respect to the total weight of the negative electrode active material layer.

The binder serves to improve the adhesion between the negative electrode active material particles and the adhesion between the negative electrode active material and the negative electrode collector. Specific examples of the binder may include polyvinylidene fluoride (PVDF), polyvinylidene fluoride-hexafluoropropylene copolymer (PVDF-co-HFP), polyvinyl alcohol, polyacrylonitrile, carboxymethyl cellulose (CMC), starch, hydroxypropyl cellulose, regenerated cellulose, polyvinylpyrrolidone, polytetrafluoroethylene, polyethylene, polypropylene, an ethylene-propylene-diene monomer rubber (EPDM rubber), a sulfonated EPDM, a styrene-butadiene rubber (SBR), a fluorine rubber, or various copolymers thereof, and any one alone thereof or a mixture of two or more thereof may be used. The binder may be included in an amount of 1 wt% to 30 wt%, preferably 1 wt% to 20 wt%, and more preferably 1 wt% to 10 wt% with respect to the total weight of the negative electrode active material layer.

The negative electrode active material layer may be prepared by, for example, coating, on a negative electrode collector, a negative electrode slurry containing a negative electrode active material, and optionally a binder and a conductive agent and drying the coated negative electrode collector, or by casting the negative electrode slurry on a separate support and then laminating a film separated from the support on the negative electrode collector.

In the lithium secondary battery, the separator separates the negative electrode and the positive electrode and provides a movement path of lithium ions, wherein any separator may be used as the separator without particular limitation as long as it is typically used in a lithium secondary battery, and particularly, a separator having high moisture-retention ability for an electrolyte as well as low resistance to the transfer of electrolyte ions may be used. Specifically, a porous polymer film, for example, a porous polymer film prepared from a polyolefin-based polymer, such as an ethylene homopolymer, a propylene homopolymer, an ethylene/butene copolymer, an ethylene/hexene copolymer, and an ethylene/methacrylate copolymer, or a laminated structure having two or more layers thereof may be used. Also, a typical porous nonwoven fabric, for example, a nonwoven fabric formed of high melting point glass fibers or polyethylene terephthalate fibers may be used. Furthermore, a coated separator including a ceramic component or a polymer material may be used to secure heat resistance or mechanical strength, and the separator having a single layer or multilayer structure may be optionally used.

Also, the electrolyte used in the present invention may include an organic liquid electrolyte, an inorganic liquid electrolyte, a solid polymer electrolyte, a gel-type polymer electrolyte, a solid inorganic electrolyte, or a molten-type inorganic electrolyte which may be used in the preparation of the lithium secondary battery, but the present invention is not limited thereto.

Specifically, the electrolyte may include an organic solvent and a lithium salt.

Any organic solvent may be used as the organic solvent without particular limitation so long as it may function as a medium through which ions involved in an electrochemical reaction of the battery may move. Specifically, an ester-based solvent such as methyl acetate, ethyl acetate, γ-butyrolactone, and ε-caprolactone; an ether-based solvent such as dibutyl ether or tetrahydrofuran; a ketone-based solvent such as cyclohexanone; an aromatic hydrocarbon-based solvent such as benzene and fluorobenzene; or a carbonate-based solvent such as dimethyl carbonate (DMC), diethyl carbonate (DEC), methylethyl carbonate (MEC), ethylmethyl carbonate (EMC), ethylene carbonate (EC), and propylene carbonate (PC); an alcohol-based solvent such as ethyl alcohol and isopropyl alcohol; nitriles such as R-CN (where R is a linear, branched, or cyclic C2-C20 hydrocarbon group and may include a double-bond aromatic ring or ether bond); amides such as dimethylformamide; dioxolanes such as 1,3-dioxolane; or sulfolanes may be used as the organic solvent. Among these solvents, the carbonate-based solvent may be used, and, for example, a mixture of a cyclic carbonate (e.g., ethylene carbonate or propylene carbonate) having high ionic conductivity and high dielectric constant, which may increase charge/discharge performance of the battery, and a low-viscosity linear carbonate-based compound (e.g., ethylmethyl carbonate, dimethyl carbonate, or diethyl carbonate) may be used.

The lithium salt may be used without particular limitation as long as it is a compound capable of providing lithium ions used in the lithium secondary battery. Specifically, LiPF₆, LiClO₄, LiAsF₆, LiBF₄, LiSbF₆, LiAlO₄, LiAlCl₄, LiCF₃SO₃, LiC₄F₉SO₃, LiN (C₂F₅SO₃) ₂, LiN (C₂F₅SO₂) ₂, LiN(CF₃SO₂)₂, LiCl, LiI, or LiB(C₂O₄)₂ may be used as the lithium salt. It is preferable to use the lithium salt in a concentration range of 0.1 M to 5.0 M, preferably, 0.1 M to 3.0 M. When the concentration of the lithium salt is included within the above range, the electrolyte may have suitable conductivity and viscosity, thereby exhibiting excellent performance, and lithium ions may effectively move.

In order to improve lifetime characteristics of the battery, suppress the reduction in battery capacity, and improve discharge capacity of the battery, additives may be additionally included in the electrolyte in addition to the above electrolyte components. For example, any one alone or a mixture of a haloalkylene carbonate-based compound such as difluoro ethylenecarbonate, pyridine, triethylphosphite, triethanolamine, cyclic ether, ethylene diamine, n-glyme, hexamethylphosphoric acid triamide, nitrobenzene derivatives, sulfur, quinone imine dye, N-substituted oxazolidinone, N,N-substituted imidazolidine, ethylene glycol dialkyl ether, an ammonium salt, pyrrole, 2-methoxy ethanol, or aluminum trichloride may be used as the additive, but the embodiment of the present invention is not limited thereto. The additive may be included in an amount of 0.1 wt% to 10 wt%, preferably, 0.1 wt% to 5 wt% with respect to the total weight of the electrolyte.

The lithium secondary battery including the positive electrode active material according to the present invention as described above has excellent initial capacity and lifetime characteristics, and may be effectively used in the electric vehicle field due to a low discharge termination resistance measured in the low SOC region, particularly, 10% or less of SOC.

### MODE FOR CARRYING OUT THE INVENTION

Hereinafter, examples of the present invention will be described in detail in such a manner that it may easily be carried out by a person with ordinary skill in the art to which the present invention pertains. The invention may, however, be embodied in many different forms and should not be construed as being limited to the examples set forth herein.

### Example

A transition metal precursor, Ni_{0.83}Co_{0.11}Mn_{0.06}(OH)₂ and LiOH·H₂O were mixed so that the weight ratio of the transition metals (Ni+Co+Mn) and Li was 1:1.03, the mixture was primarily sintered at 900 °C for 10 hours, and then milled to prepare a lithium nickel-based oxide. It was confirmed that the prepared lithium nickel-based oxide powder had single particles and quasi-single particles mixed.

The lithium nickel-based oxide powder prepared above was secondarily sintered at 700 °C for 8 hours.

Then, the secondarily sintered lithium nickel-based oxide and boric acid were mixed at a weight ratio of 100:0.15 and heat-treated at 300 °C for 5 hours to prepare a positive electrode active material having a boron coating layer formed on the surface of the lithium nickel-based oxide.

### Comparative Example 1

A transition metal precursor, Ni_{0.83}Co_{0.11}Mn_{0.06} (OH) ₂ and LiOH·H₂O were mixed so that the weight ratio of the transition metals (Ni+Co+Mn) and Li was 1:1.03, the mixture was primarily sintered at 900 °C for 10 hours, and then milled to prepare lithium nickel-based oxide powder. It was confirmed that the lithium nickel-based oxide powder prepared through the sintering had single particles and quasi-single particles mixed. The lithium nickel-based oxide prepared above was used as a positive electrode active material.

### Comparative Example 2

A transition metal precursor, Ni_{0.83}Co_{0.11}Mn_{0.06} (OH) ₂ and LiOH·H₂O were mixed so that the weight ratio of the transition metals (Ni+Co+Mn) and Li was 1:1.03, the mixture was primarily sintered at 900 °C for 10 hours, and then milled to prepare a lithium nickel-based oxide. It was confirmed that the lithium nickel-based oxide powder prepared through the sintering had single particles and quasi-single particles mixed.

The lithium nickel-based oxide prepared above was washed with water, and then the lithium nickel-based oxide and boric acid were mixed at a weight ratio of 100:0.15 and heat-treated at 300 °C for 5 hours to prepare a positive electrode active material having a boron coating layer formed on the surface of the lithium nickel-based oxide.

### Comparative Example 3

A transition metal precursor, Ni_{0.83}Co_{0.11}Mn_{0.06}(OH)₂ and LiOH·H₂O were mixed so that the weight ratio of the transition metals (Ni+Co+Mn) and Li was 1:1.03, the mixture was primarily sintered at 900 °C for 10 hours, and then milled to prepare a lithium nickel-based oxide. It was confirmed that the lithium nickel-based oxide powder prepared through the sintering had single particles and quasi-single particles mixed.

The lithium nickel-based oxide prepared above was secondarily sintered at 700 °C for 8 hours to prepare a positive electrode active material.

### Experimental Example 1: Structural Analysis

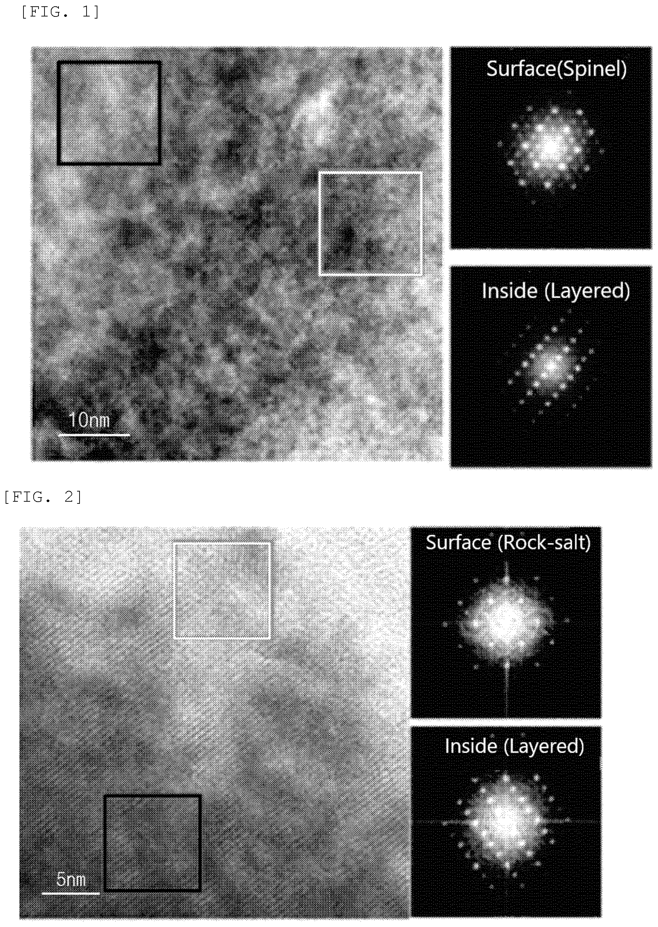

The positive electrode active material particles prepared in Example and Comparative Examples 1 to 3 were analyzed through a transmission electron microscopy (TEM) to confirm the surface and internal structure of the positive electrode active material particles. Measurement results are shown in FIGS. 1 to 4.

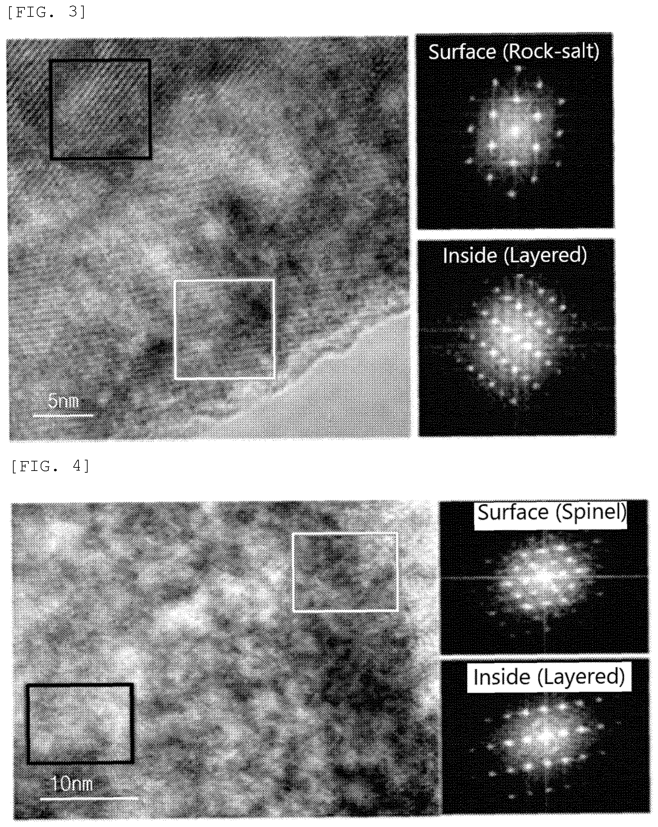

As shown in FIGS. 1 and 3, it may be confirmed that the positive electrode active materials in Example and Comparative Example 3, which performed the high-temperature secondary sintering, have spinel-like phases on the surface of the particles, whereas the positive electrode active materials in Comparative Examples 1 and 2, which did not perform the high-temperature secondary sintering, have rock-salt phases on the surface of the particles. Since the rock-salt phase is electrically inactive, when the rock-salt phase is present on the surface of the particles of the positive electrode active material, the resistance increases, thereby leading to deterioration in the output characteristics.

### Experimental Example 2: Measurement of Residual Lithium Amount

After 5 g of each of the positive electrode active material powder prepared in Example and Comparative Examples 1 and 2 was dispersed in 100 mL of water, a change in the pH was measured while the solution was titrated with 0.1 M HCl to obtain a pH titration curve. The LiOH residual amount and the Li₂CO₃ residual amount in each positive electrode active material were calculated using the pH titration curve, and the sum of these values was evaluated as a residual lithium amount. Measurement results are shown in Table 1 below.

**[Table 1]**

| | Example | Comparative Example 1 | Comparative Example 2 |
|---|---|---|---|
| LiOH (wt%) | 0.18 | 0.33 | 0.15 |
| Li₂CO₃ (wt%) | 0.05 | 0.2 | 0.1 |
| Total residual lithium amount (wt%) | 0.23 | 0.53 | 0.25 |

Referring to Table 1 above, it may be confirmed that the positive electrode active material in Example prepared according to the method of the present invention has a residual lithium amount even smaller than the positive electrode active material in Comparative Example 1, and has a residual lithium amount smaller than the positive electrode active material in Comparative Example 2, which performed the washing process even though the washing process was not performed in Example.

### <Manufacture of Secondary Battery>

A positive electrode slurry was prepared by mixing each of the positive electrode active materials, which are prepared in Example and Comparative Examples 1 to 3, a conductive agent (carbon black, Denka), and a PVDF binder in a weight ratio of 96:2:2 in N-methylpyrrolidone. The positive electrode slurry was coated on one surface of an aluminum current collector, dried at 130 °C, and then rolled to prepare a positive electrode.

A lithium metal electrode was used as a negative electrode.

An electrode assembly was manufactured by disposing a separator between the positive electrode and the negative electrode, was placed in a battery case, and an electrolyte solution was injected into the case to manufacture a coin-half cell. The electrolyte solution was prepared by dissolving 1 M LiPF₆ in a mixed organic solvent in which ethylene carbonate/dimethyl carbonate/diethyl carbonate were mixed in a volume ratio of 1:2:1, and adding 2 wt% of vinylene carbonate (VC).

### Experimental Example 3: Initial Capacity Evaluation

Each of the coin-half cells manufactured above was charged to 4.25 V at 0.1 C, and then discharged to 2.5 V at 0.1 C to measure the initial charging capacity and the initial discharging capacity. Measurement results are shown in Table 2 below.

**[Table 2]**

| | Example | Comparative Example 1 | Comparative Example 2 | Comparative Example 3 |
|---|---|---|---|---|
| Charge capacity (mAh/g) | 223.3 | 220.1 | 222.8 | 220.5 |
| Discharge capacity (mAh/g) | 202.6 | 198.5 | 202.5 | 198.9 |

Referring to Table 2 above, it may be confirmed that the initial discharging capacity of the cell to which the positive electrode active material in Example 1 prepared according to the method of the present invention is applied is higher than those of the cells to which the positive electrode active materials of Comparative Examples 1-3 are applied. In particular, as compared with Comparative Examples 1 and 3 without a boron coating layer, it may be confirmed that the charging capacity and the discharging capacity in Example 1 are remarkably excellent even though they have the same composition.

### Experimental Example 4: Evaluation of Resistance Characteristics versus SOC

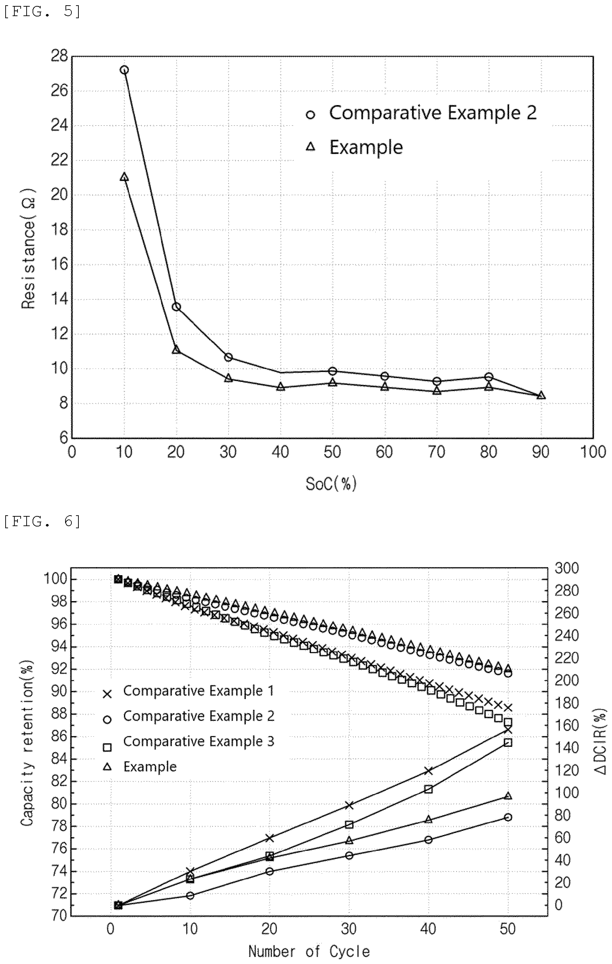

The coin-half cells manufactured using the positive electrode active materials in Example and Comparative Example 2 were charged and discharged to 2.5-4.25 V once under the condition of 0.1C/0.1C, charged to 4.25 V again, and discharged to 10% of the cell discharging capacity by 10%, and resistance (unit: Ω) versus SOC was measured. In this case, the resistance was measured through the voltage change when the current was applied at 2.5 C for 10 seconds at each SOC. Measurement results are shown in FIG. 5 and Table 3 below.

**[Table 3]**

| SOC (%) | Example | Comparative Example 2 |
|---|---|---|
| 90 | 8.48 | 8.45 |
| 80 | 8.93 | 9.49 |
| 70 | 8.71 | 9.32 |
| 60 | 8.93 | 9.58 |
| 50 | 9.15 | 9.84 |
| 40 | 8.93 | 9.84 |
| 30 | 9.49 | 10.71 |
| 20 | 11.1 | 13.66 |
| 10 | 20.9 | 27.28 |

Referring to Table 3 and FIG. 5, it may be confirmed that the cell to which the positive electrode active material in Example 1 prepared according to the method of the present invention is applied has resistance characteristics superior to the cell to which the positive electrode active material in Comparative Example 2 is applied. In particular, the cell to which the positive electrode active material in Comparative Example 2, in which the boron coating layer is formed without high-temperature sintering, is applied, has a very rapid increase in the resistance as the SOC decreases.

### Experimental Example 5: High-temperature Lifetime Characteristic Measurement

Charging and discharging each of the coin-half cells manufactured as described above at 45 °C to 2.5-4.25 V at 0.1C/0.1C was set as 1 cycle, 50 cycles of charging and discharging were performed, and then the capacity retention and resistance increase rate were measured to evaluate lifetime characteristics. The measurement results are presented in Table 4 and FIG. 6 below.

**[Table 4]**

| | Examples | Comparative Example 1 | Comparative Example 2 | Comparative Example 3 |
|---|---|---|---|---|
| Capacity retention (%) | 91.9 | 88.5 | 91.7 | 87.3 |
| Resistance increase rate (%) | 95.9 | 156.0 | 78.1 | 144.4 |

As shown in Table 4 and FIG. 6, it may be confirmed that the cell to which the positive electrode active material in Example prepared according to the method of the present invention is applied has excellent high-temperature lifetime characteristics as compared with the cells to which the positive electrode active materials of Comparative Examples 1 to 3 are applied.

The cells to which the positive electrode active materials in Comparative Examples 1 and 3 in which the boron coating layer was not formed were applied, the capacity retention was low and the resistance was greatly increased. Meanwhile, the positive electrode active material in Comparative Example 2 on which the boron coating layer was formed has good high-temperature lifetime characteristics, but there is a limitation in that the discharging termination resistance is greatly increased as shown in Table 3 above.

## Claims

1. A method for preparing a positive electrode active material, the method comprising the steps of:
mixing a transition metal precursor and a lithium raw material and primarily sintering the mixture at 800 °C to 1,000 °C to prepare a lithium nickel-based oxide having the form of at least one among single particles and quasi-single particles;
secondarily sintering the lithium nickel-based oxide at 600 °C to 800 °C; and
mixing the secondarily sintered lithium nickel-based oxide and a boron raw material and heat-treating the mixture to form a coating layer.

2. The method of claim 1, wherein the transition metal precursor is a nickel cobalt manganese hydroxide having a Ni content of 80 mol% or more.

3. The method of claim 1, wherein the lithium nickel-based oxide has composition represented by Formula 1 below:
[Formula 1] LiₐNi_{b}Co_{c}M¹_{d}M²ₑO₂
wherein, in Formula 1 above, M¹ is Mn, Al, or a combination thereof, M² is Zr, W, Ti, Mg, Ca, Sr, or Ba, 0.8≤a≤1.2, 0.8≤b<1, 0<c<0.2, 0<d<0.2, and 0≤e≤0.1.

4. The method of claim 1, wherein the primary sintering temperature is 800 °C to 950 °C.

5. The method of claim 1, wherein the primary sintering is performed in an oxygen atmosphere for 6 hours to 35 hours.

6. The method of claim 1, wherein the secondary sintering temperature is 650 °C to 750 °C.

7. The method of claim 1, wherein the secondary sintering is performed in an oxygen atmosphere for 2 hours to 10 hours.

8. The method of claim 1, wherein the heat-treatment temperature is 200 °C to 500 °C.

9. The method of claim 1, wherein a step of washing is not comprised.

10. A positive electrode active material comprising:
a lithium nickel-based oxide having composition represented by Formula 1 below and having the form of at least one among single particles and quasi-single particles; and
a coating layer formed on the surface of the lithium nickel-based oxide and including boron (B),
wherein a spinel-like phase is included on the surface of the lithium nickel-based oxide:
[Formula 1] LiₐNi_{b}Co_{c}M¹_{d}M²ₑO₂
wherein, in Formula 1 above, M¹ is Mn, Al, or a combination thereof, M² is Zr, W, Ti, Mg, Ca, Sr, or Ba, 0.8≤a≤1.2, 0.83≤b<1, 0<c<0.17, 0<d<0.17, and 0≤e≤0.1.

11. The positive electrode active material of claim 10, wherein the single particles are particles composed of a single nodule, and the quasi-single particles are complexes of at most 30 nodules.

12. The positive electrode active material of claim 10, wherein the positive electrode active material has a residual lithium amount of 0.5 wt% or less.

13. The positive electrode active material of claim 10, wherein the positive electrode active material has an average particle diameter of nodules of 0.5 um to 3 µm.

14. The positive electrode active material of claim 10, wherein the positive electrode active material is used to manufacture a coin-half cell,
a ratio R₁₀/R₉₀ of resistance at SOC 10 to resistance at SOC 90 measured while charging the coin-half cell to 4.25 V and discharging to 2.5 V at 0.1C/0.1C is 3 or less,
charging and discharging the coin-half cell at 45 °C to 2.5-4.25 V at 0.1C/0.1C is set as 1 cycle, and 50 cycles of charging and discharging are performed to measure a resistance increase rate, and the measured resistance increase rate is 100% or less.

15. A positive electrode comprising a positive electrode active material layer comprising the positive electrode active material of any one of claims 10 to 14.

16. A lithium secondary battery comprising the positive electrode of claim 15.
